Europäisches Patentamt

European Patent Office

Office européen des brevets

(19)

(11) Numéro de publication : **0 296 021 B1**

(12) **FASCICULE DE BREVET EUROPEEN**

(45) Date de publication du fascicule du brevet :
**13.05.92 Bulletin 92/20**

(51) Int. Cl.[5] : **C08F 10/02,** C08F 4/642,
C08F 2/34

(21) Numéro de dépôt : **88401379.8**

(22) Date de dépôt : **07.06.88**

(54) **Procédé de traitement de composante catalytique sur support d'oxyde métallique poreux pour la polymérisation des oléfines enphase gazeuse application du catalyseur obtenu à la polymérisation des oléfines.**

(30) Priorité : **16.06.87 FR 8708403**

(43) Date de publication de la demande :
**21.12.88 Bulletin 88/51**

(45) Mention de la délivrance du brevet :
**13.05.92 Bulletin 92/20**

(84) Etats contractants désignés :
**AT BE DE FR GB IT NL SE**

(56) Documents cités :
**EP-A- 0 133 383**
**EP-A- 0 174 104**
**FR-A- 2 566 782**

(73) Titulaire : **ELF ATOCHEM S.A.**
**4 & 8, Cours Michelet La Défense 10**
**F-92800 Puteaux (FR)**

(72) Inventeur : **Brun, Claude**
**Clos St Pierre**
**F-64320 Idron (FR)**
Inventeur : **Cheux Auguste**
**18, Route d'Artix**
**F-64370 Arthez-de-Bearn (FR)**
Inventeur : **Barthel, Eric**
**18, Rue du Tremblay**
**F-64000 Pau (FR)**

(74) Mandataire : **Foiret, Claude et al**
**ATOCHEM Département Propriété Industrielle**
**F-92091 Paris la Défense 10 Cédex 42 (FR)**

## Description

La présente invention concerne un procédé de traitement de composante catalytique du type Ziegler déposée sur un support inorganique du type oxyde métallique poreux permettant de conserver sa morphologie et de contrôler celle du polymère résultant de la polymérisation en phase gazeuse de l'éthylène ou de la copolymérisation en phase gazeuse de l'éthylène et d'au moins une alpha oléfine contenant de 3 à 12 carbones.

Le procédé consiste à prépolymériser de l'éthylène, jusqu'à un degré d'avancement réduit, en présence d'une composante catalytique comprenant au moins du titane, du magnésium et du chlore déposés sur un support à base d'oxyde métallique poreux. Le prépolymère actif résultant, en association avec un cocatalyseur, servant également comme protecteur de morphologie, constitue un catalyseur de polymérisation des oléfines permettant d'éviter la dissociation des particules de polymère en croissance, donc la formation de fines particules. Un autre avantage du procédé est de permettre la synthèse de prépolymères à faible degré d'avancement supportant l'intégralité du cocatalyseur.

Il est connu de déposer les composantes catalytiques sur un support à base d'oxyde métallique poreux, ou de prépolymériser de l'éthylène en présence desdites composantes catalytiques. Ces deux procédés sont connus pour régler la taille du système injecté dans un réacteur de polymérisation en phase gazeuse. Mais leur simple combinaison ne permet pas de contrôler la taille des particules, d'éviter la formation de fines particules provenant de la dissociation des particules de polymère en croissance, d'améliorer l'efficacité du comonomère à abaisser la densité ou réduire le taux de cristallinité (comonomer efficiency).

Il est également connu pour les procédés de polymérisation haute pression, différents des procédés de polymérisation en phase gazeuse de déposer une composante catalytique sur un support métallique poreux et de prépolymériser sur cet ensemble une alpha oléfine. C'est le cas de la technique décrite dans le EP 133383 où après dépôt sur support métallique poreux la composante catalytique est prépolymérisée par contact avec une alpha oléfine de $C_4$ à $C_{18}$ en présence d'un alkylaluminium non complexé. Dans ces conditions on obtient un catalyseur de granulométrie moyenne inférieure à 7 µm, difficile à isoler car trop fin, et totalement inadapté à une polymérisation en phase gazeuse où au contraire il faut un catalyseur possédant le moins possible de fines particules.

Selon le FR-A 2 566 782, il est connu que la composante catalytique sans support à base d'oxyde métallique poreux, engagée directement en polymérisation fluidisée, provoque des risques d'échauffement ponctuel qui peuvent conduire à la formation d'agglomérats et à des prises en masse et au mieux à l'éclatement du catalyseur avec perte de morphologie et formation de fines particules toujours dangereuses en lit fluidisé.

Pour remédier à ces inconvénients la composante catalytique peut être associée à un support granulaire réfractaire tel qu'alumine, silice, magnésie ou silicate d'aluminium. Toutefois, comme précisé dans ce FR-A 2 566 782, le support granulaire augmente l'activité du système catalytique avec les conséquences précédentes. Pour éviter ces conséquences, on augmente la quantité de support ce qui conduit alors à une quantité de résidu inorganique relativement élevé dans le polymère final.

La composante catalytique sans support à base d'oxyde métallique poreux peut être également transformée en prépolymère. Mais comme dans le cas précédent, pour diminuer l'activité de la composante il faut augmenter la quantité de prépolymère qui, toujours selon ce FR-A 2 566 782, réduit l'intérêt économique du procédé de polymérisation en phase gazeuse en alourdissant la section de prépolymérisation par augmentation des quantités de solvant à retraiter et par besoin de gros moyens de stockage.

Pour éviter ces inconvénients il est recommandé de traiter, selon ce FR-A 2 566 782 par l'hydrogène, la composante catalytique sous forme de prépolymère ou déposée sur un support à base d'oxyde métallique poreux en présence de cocatalyseur avant son engagement en polymérisation en lit fluidisé encore appelée polymérisation en phase gazeuse. Cette technique présente l'inconvénient de désactiver les systèmes catalytiques ou les prépolymères et de ce fait de faire chuter leur productivité.

Cette technique consistant à prépolymériser de l'éthylène en présence d'une composante catalytique déposée sur support d'oxyde métallique poreux en présence du seul alkylaluminium est reprise dans le EP 174104. Ce document confirme qu'au cours de la prépolymérisation il y a éclatement des particules et impossibilité dans les conditions décrites de conserver la morphologie de la composante catalytique dans le prépolymère, a fortiori dans le polymère final quand le prépolymère actif est engagé en polymérisation de l'éthylène. Selon la technique de ce EP 174104 il est explicitement indiqué que la composante prépolymérisée se présente sous forme de poudre dont la taille des particules est réduite par rapport à celle de la composante non prépolymérisée.

Le procédé de traitement, selon l'invention, de la composante catalytique est caractérisé en ce que : après imprégnation de ses différents constituants sur un support à base d'oxyde métallique poreux on effectue une prépolymérisation de l'éthylène, au moins partiellement en suspension, en présence d'un cocatalyseur choisi parmi les alkylaluminiums, complexés par un donneur d'électrons, jusqu'à un degré de prépolymérisation adapté au procédé de polymérisation en lit fluide et phase gazeuse dans lequel le prépolymère sera ultérieurement mis en oeuvre.

Le degré de prépolymérisation est supérieur à 1,1 et de préférence tel que le prépolymère formé représente au plus 1 % en poids du polymère final.

Le degré de prépolymérisation est défini comme étant le poids de prépolymère, poids de catalyseur inclus, divisé par le poids de l'ensemble de la composante catalytique sur support d'oxyde métallique poreux utilisé pour obtenir la masse de prépolymère considéré.

En raison de la nature poreuse du catalyseur et de son support il est possible d'intégrer tout le cocatalyseur, même à des degrés de prépolymérisation faible. De préférence les degrés de prépolymérisation se situent entre 5 et 20 g. de polyéthylène par gramme de composante supportée sur oxyde métallique poreux.

La composante catalytique initiale de polymérisation de l'éthylène ou de copolymérisation de l'éthylène et d'au moins une alpha oléfine contenant de 3 à 12 carbones est de façon connue le résultat de la combinaison d'au moins un composé du titane, un composé du magnésium, un halogène et éventuellement un donneur ou accepteur d'électrons et de tout autre composé utilisable dans ce type de catalyseur imprégné sur un support d'oxyde métallique poreux.

Le composé du titane est choisi parmi les composés de formule $Ti(OR)_xCl_{4-x}$, x étant un nombre compris entre 0 et 4 et R étant un radical hydrocarboné aliphatique ou aromatique de $C_1$ à $C_{14}$, ou $COR'$ avec $R'$ un radical hydrocarboné aliphatique ou aromatique de $C_1$ à $C_{14}$.

Le composé du magnésium est habituellement choisi parmi les composés de formule $Mg(OR)_nX_{2-n}$ dans laquelle X est le brome, l'iode et plus particulièrement le chlore, R est l'hydrogène ou un radical alkyl ou cycloalkyl et "n" est inférieur ou égal à 2.

Au composé de magnésium peut être associé un composé organo aluminique, choisi plus particulièrement parmi les aluminoxanes.

Le donneur ou accepteur d'électrons est un composé organique liquide ou solide connu pour entrer dans la composition de ces catalyseurs. Le donneur d'électrons peut être un composé mono ou polyfonctionnel avantageusement choisi parmi les acides carboxyliques aliphatiques ou aromatiques et leurs esters alcoyliques, les éthers aliphatiques ou cycliques, les cétones, les esters vinyliques, les dérivés acryliques, en particulier acrylates ou méthacrylates d'alcoyle, et les silanes. Conviennent notamment comme donneurs d'électrons les composés tels que paratoluate de méthyle, benzoate d'éthyle, acétate d'éthyle ou de butyle, éther éthylique, para-anisate d'éthyle, dibutylphtalate, dioctylphtalate, diisobutylphtalate, tétrahydrofuranne, dioxane, acétone, méthylisobutylcétone, acétate de vinyle, méthacrylate de méthyle, et les silanes, les alcoxysilanes aromatiques ou aliphatiques saturés ou insaturés, comme le phényltriéthoxysilane, le diphényldiméthoxysilane, le vinyltriéthoxysilane, le tétraéthoxysilane.

L'accepteur d'électrons est un acide de Lewis, choisi de préférence parmi les chlorure d'aluminium, le trifluorure de bore, le chloranile ou encore les alcoylaluminiums et alcoylmagnésiums.

Par support poreux d'oxyde métallique on entend particulièrement des composés choisis parmi $SiO_2$, $Al_2O_3$, $TiO_2$, $ZrO_2$ et les oxydes mixtes renfermant $SiO_2$ et un ou plusieurs oxydes métalliques pris parmi $ZrO_2$, $TiO_2$, MgO et $Al_2O_3$. Les supports particulièrement adaptés sont les silices particulaires amorphes, caractérisées par des volumes poreux de 1,5 à 3 $cm^3/g$, des surfaces spécifiques de 250 à 350 $m^2/g$ et ayant des pores de rayons moyens de l'ordre de 90 à 150 Å. Ces silices peuvent être de morphologie granulaire anguleuses ou encore de morphologie sphéroïdale.

Avant de l'utiliser comme support de catalyseur, l'oxyde métallique peut faire l'objet d'un traitement thermique et/ou d'un traitement chimique de surface afin d'éliminer toute trace d'eau et éventuellement de l'activer.

Le traitement thermique peut consister à soumettre le support d'oxyde métallique durant plusieurs heures à des températures de 150 à 800°C en fluidisation dans un courant de gaz inerte.

Le traitement chimique du support peut consister, après avoir éliminé l'eau physisorbée par traitement à une température voisine de 200°C dans un lit fluidisé par un courant de gaz inerte sec durant plusieurs heures à traiter le support par un réactif chimique choisi parmi les alcools, les silanes, le silazanes, les agents chlorants minéraux ou organiques, les chlorures organiques d'acide carboxylique, des alkyls aluminiques.

L'imprégnation de l'élément de la composante catalytique sur l'oxyde métallique poreux peut s'effectuer selon toutes les combinaisons possibles. Cette opération peut être, par exemple, réalisée de la façon suivante. Les éléments de la composante catalytique peuvent être mis sous forme de complexe par dissolution dans un donneur d'électrons solubilisant, choisi de préférence parmi les esters d'acides carboxyliques, les éthers oxydes aliphatiques ou cycliques, les alcools. Le complexe en solution peut être précipité sur le support par addition par exemple d'un non solvant ou par élimination du solvant de dissolution. Après séchage le complexe supporté sur l'oxyde métallique poreux peut être remis en suspension dans un hydrocarbure liquide, tel que le n-hexane et éventuellement à ce stade activé par un cocatalyseur. La composante catalytique fixée sur le support est ensuite récupérée et séchée.

Un procédé d'imprégnation préféré consiste à imprégner le support d'oxyde métallique poreux d'un précurseur liquide constitué d'alkylmagnésium ou d'un mélange d'alkylmagnésium et d'alkylaluminium. Puis après traitement par un agent chlorant, tel que par exemple HCl, le support ainsi traité est imprégné avec le composé de titane.

La composante catalytique imprégnant le support est habituellement constituée de composé de titane et de composé de magnésium représentant 0,5 à 10 parties en poids de magnésium et 0,1 à 10 parties en poids de titane pour 100 parties en poids d'oxyde métallique poreux.

La composante catalytique déposée sur le support d'oxyde métallique poreux est ensuite mise dans sa forme définitive en la faisant participer à une prépolymérisation, au moins partiellement en suspension, d'éthylène en présence d'un alkylaluminium complexé par un donneur d'électrons comme cocatalyseur.

Dans un mode préféré de prépolymérisation en suspension, sous agitation en régime turbulent, on prépolymérise l'éthylène, en présence de préférence d'un limitateur de chaîne et en présence d'un cocatalyseur choisi parmi les alkylaluminiums connus pour cet emploi complexé par un donneur d'électrons, à une température comprise entre 0 et 110°C, de préférence entre 20 et 60°C, pour une pression totale inférieure à 20 bars absolus constituée essentiellement de gaz inerte tel que l'azote. Afin de conserver au maximum la morphologie initiale de la composante catalytique et de son support, il est recommandé de contrôler l'alimentation en monomère dans le réacteur. Le contrôle de morphologie des particules de prépolymère en croissance est particulièrement délicat pour les catalyseurs sur support d'oxyde métallique poreux à morphologie sphéroïdale. Les tensions développées lors des procédés de synthèse de ces supports ne demandent qu'à être libérées sous l'effet de la prépolymérisation risquant d'entrainer la fragmentation des sphéroïdes. Cette fragmentation peut être évitée lors de la prépolymérisation en maintenant une vitesse d'alimentation de la première heure de prépolymérisation inférieure ou égale à 10 Nl x h$^{-1}$ x g$^{-1}$ de l'ensemble composante catalytique sur support d'oxyde métallique poreux.

Le débit de monomère est ensuite augmenté de façon à ce que celui-ci reste inférieur ou égal à 100 Nl x h$^{-1}$ x g$^{-1}$ de prépolymère présent dans le réacteur à l'instant considéré.

La prépolymérisation en suspension est poursuivie jusqu'à un degré de prépolymérisation adapté au procédé de polymérisation ultérieur.

A un stade quelconque de la prépolymérisation on peut ajouter aux composants un protecteur de morphologie, obtenu habituellement par réaction préalable d'un alkylaluminium et d'un donneur d'électrons. Le protecteur de morphologie peut être introduit dans le milieu réactionnel de prépolymérisation. Il peut également être avantageusement additionné au prépolymère après la prépolymérisation soit directement dans le milieu réactionnel, soit au prépolymère stocké en suspension sous gaz inerte. Le protecteur de morphologie permet de conserver non seulement la morphologie du support et de la composante catalytique sur support prépolymérisé mais encore de donner au polymère final cette morphologie. L'utilisation du complexe alkylaluminium donneur d'électrons augmente l'efficacité du comonomère, dans le cas de copolymérisation, à faire baisser la densité du copolymère.

Dans un mode possible de prépolymérisation en suspension sous agitation en régime turbulent, on procède à la prépolymérisation dans les conditions décrites précédemment jusqu'à un degré d'avancement réduit de prépolymérisation, de préférence inférieur à 5 g. de polymère par gramme de composante catalytique supportée sur oxyde métallique poreux.

A ce stade, le prépolymère est isolé puis repris dans un système de prépolymérisation en phase gazeuse de façon à passer du degré d'avancement réduit de polymérisation au degré de prépolymérisation adapté au procédé de polymérisation ultérieur.

Cette partie de prépolymérisation en phase gazeuse s'effectue dans les conditions habituelles au procédé de polymérisation de l'éthylène en phase gazeuse. On peut, par exemple, associer dans un réacteur le prépolymère à degré d'avancement réduit à une charge de polyoléfine de granulométrie moyenne inférieure ou égale à 3000 et de préférence inférieure ou égale à 1000 µm, en présence de préférence d'un cocatalyseur tel que défini précédemment. Après homogénéisation, on poursuit la prépolymérisation par introduction à débit contrôlé de monomère de façon à éviter l'éclatement et la formation d'aggrégat. Le monomère est de préférence l'éthylène, ou un mélange d'éthylène et de butène. De façon préférentielle la prépolymérisation en phase gazeuse est réalisée à une température comprise entre 40 et 80°C sous une pression totale, de monomère et de gaz inerte, inférieure ou égale à 20 bars.

Cette prépolymérisation en phase gazeuse est poursuivie jusqu'à l'obtention d'un degré de prépolymérisation adapté au procédé de polymérisation ultérieur. Toutefois il est recommandé que ce degré de prépolymérisation soit tel que le prépolymère formé représente au plus 1 % en poids du polymère final. Afin de conserver au maximum la morphologie initiale de la composante catalytique et de son support, il est recommandé de contrôler l'alimentation en monomère dans le réacteur. Une vitesse d'alimentation favorable pour la première heure est inférieure ou égale à 10 Nl. x h.$^{-1}$ x g$^{-1}$ de la composante catalytique sur support d'oxyde métallique poreux.

Le débit de monomère peut être augmenté de façon à ce que celui-ci reste inférieur ou égal à 100 Nl x $h^{-1}$ x $g^{-1}$ de prépolymère présente dans le réacteur à l'instant considéré.

Comme montré dans le cas précédent, la prépolymérisation peut être effectuée à partir d'éthylène, ou, d'éthylène et d'au moins une alpha oléfine possédant de 3 à 12 carbones. Bien que dans ces conditions l'alpha oléfine puisse être introduite à un moment quelconque de la prépolymérisation il est préférable de mettre en contact la composante catalytique sur support d'oxyde métallique poreux et le cocatalyseur avec l'alpha oléfine de préférence en ajoutant de façon continue en environ 30 minutes une quantité en poids d'alpha oléfine représentant de préférence moins de 50 % du poids de la composante catalytique sur support d'oxyde métallique poreux. On effectue ce précontact de préférence avec une alpha oléfine possédant de 6 à 8 atomes de carbone dans sa molécule. L'éthylène est ensuite ajouté à l'état pur ou mélangé à une alpha oléfine possédant de 3 à 12 atomes de carbone dans sa molécule. Dans ces conditions l'activité du prépolymère actif obtenu est améliorée ainsi que la morphologie du polymère obtenu en présence de ce prépolymère actif.

Quand une alpha oléfine est associée à l'éthylène dans la prépolymérisation le rapport molaire alpha oléfine-éthylène mis en oeuvre est inférieur à 0,1.

Si le support d'oxyde métallique poreux permet de régler la forme et la taille des particules de composante catalytique, la prépolymérisation permet de conserver cette forme et d'éviter la dissociation de ces particules dans la polymérisation ultérieure.

Dans le procédé selon l'invention, le rapport des concentrations molaires dans le protecteur de morphologie, calculé en rapport aluminium sur donneur d'électrons est habituellement inférieur à 40 et mieux compris entre 25 et 10. Ce protecteur de morphologie est associé dans une proportion préférentielle de 500 à 100 000 ppm calculée en aluminium par rapport à la composante sur support d'oxyde métallique poreux dans le prépolymère de degré de prépolymérisation adapté au procédé de polymérisation ultérieur.

Pour la fabrication du protecteur de morphologie on peut choisir les composants parmi les donneurs d'électrons définis précédemment et les alkylaluminiums connus habituellement comme cocatalyseur. Ces alkylaluminiums sont généralement choisis parmi les composés de formule $Al\,(R'')_c\,X'_d\,H_e$ dans laquelle :

– X′ est Cl, ou R″, représentant un radical hydrocarboné saturé de $C_1$ à $C_{14}$

Avec : $0 < d < 1,5$ ; $0 < e < 1$ et $c + d + e = 3$

Comme exemples, on peut citer : $Al(C_2H_5)_3$, $Al(C_2H_5)_2Cl$, $Al(C_4H_9)_3$, $Al_2(C_2H_5)_3Cl_3$, $Al(C_4H_9)_2H$, $Al(C_6H_{13})_3$, $Al(C_8H_{17})_3$, $Al(C_2H_5)_2H$ et $Al(C_2H_5)_2(OC_2H_5)$. Peuvent encore être cités les aluminoxanes et les aluminosiloxanes.

Le mélange d'alkylaluminium et de donneur d'électrons s'effectue sous atmosphère inerte par tous moyens appropriés à ces types de composants. Lorsque le protecteur de morphologie liquide est ajouté au prépolymère après prépolymérisation, l'opération se fait, sous atmosphère inerte, soit par mélange au prépolymère en suspension liquide inerte soit par imprégnation de la poudre de prépolymère.

Dans la mesure où un limitateur de chaîne est utilisé dans la prépolymérisation, on choisit de préférence l'hydrogène. Ce limitateur de chaine permet de contrôler la masse moléculaire de prépolymère pendant la prépolymérisation.

Le prépolymère obtenu selon l'invention est généralement stocké sous forme sèche en vue d'une utilisation ultérieure comme catalyseur de polymérisation en lit fluide ou en phase gazeuse pour la fabrication de polyéthylène linéaire en poudre à morphologie contrôlée. Cette composante catalytique, sous forme de prépolymère conserve sa morphologie en cours de polymérisation et permet, grâce à cette propriété, d'obtenir des polyéthylènes linéaires possédant également une morphologie identique.

De plus la poudre du prépolymère injectée dans le réacteur de polymérisation étant à dominante organique, la prépolymérisation améliore l'homogénéité du lit tout en augmentant les tailles particulaires ce qui limite les entrainements hors du lit.

La composante catalytique traitée selon l'invention est utilisée comme une composante classique dans les procédés de polymérisation en lit fluide en phase gazeuse des oléfines. Bien qu'elle puisse être utilisé seule, il n'est pas exclu, afin de régler sa productivité, d'ajouter en complément en cocatalyseur au milieu réactionnel. Dans ce cas le cocatalyseur peut être un protecteur de morphologie et mieux identique à celui utilisédans la fabrication du prépolymère.

La polymérisation d'éthylène en phase gazeuse, en présence d'hydrogène et de gaz inerte peut être effectuée dans tout réacteur permettant une polymérisation en phase gazeuse et en particulier dans un réacteur à lit agité ou à lit fluidisé. Les conditions de mise en oeuvre sont connues de l'art antérieur. On opère généralement à une température inférieure au point de fusion Tf de l'homopolymère ou du copolymère à synthétiser et plus particulièrement entre 20°C et (Tf -5°C) et sous une pression telle que l'éthylène et éventuellement les autres monomères hydrocarbonés présents dans le réacteur soient essentiellement en phase vapeur.

Les exemples suivants illustrent l'invention sans la limiter.

## EXEMPLE 1

a) Une silice granulaire (type 332 GRACE) est séchée en fluidisation pendant 5 heures dans un courant d'azote à 200°C. Dans un réacteur à évent de deux litres, muni d'une sole filtrante, purgé à l'azote, on introduit : 22 g de SiO$_2$ séchés, 200 ml d'hexane sec, 33 mM d'hexaméthyldisilazane. Le milieu est agité durant 1 heure à 55°C puis filtré, lavé avec 200 ml d'hexane et séché à 55°C sous azote.

Sur cette silice traitée on ajoute sous azote et en agitant un mélange de 92 mM de n-butyl-(1-méthylpropyl)magnésium (DBM) et de 23 mM de tétraisobutylaluminoxane (TIBAO). Le mélange en suspension est agité 1 heure à 55°C, puis filtré. Après remise en suspension dans 200 ml d'hexane à 25°C, on fait barboter 1,1 mole d'HCl pendant 1 heure. On dégaze l'HCl dissous par barbotage d'azote. La suspension est ensuite portée à 55°C et on ajoute 60 mM de TiCl$_4$ sous agitation maintenue 1 heure. Après filtration la composante catalytique sur support d'oxyde métallique poreux est lavée deux fois avec 200 ml d'hexane et séchée sous azote à 55°C et récupérée toujours sous azote.

b) Dans le réacteur précédent on introduit à 50°C sous azote et sous agitation de 150 t/mn. : 125 ml d'hexane, 4 mM de trihexylaluminium (THA), sous forme de complexe THA-PTES (phényltriéthoxysilane) dans un rapport molaire de 30, et 4,6 g. de la composante catalytique sur support d'oxyde métallique poreux précédente. On introduit ensuite avec barbotage sous débit contrôlé de l'éthylène dans les conditions suivantes :

4,5 Nl/h pendant 1 heure

puis 9,5 Nl/h pendant 5 heures

L'introduction d'éthylène terminée on élimine le solvant par entrainement à 60°C sous azote et 25,3 g. de composant catalytique sur support d'oxyde métallique poreux sous forme de prépolymère sec sont récupérés et conservés sous azote. Le degré d'avancement est égal à 5,5 g. de prépolymère par gramme de composante catalytique sur support d'oxyde métallique poreux.

## EXEMPLE 2

Dans le réacteur de l'exemple 1 on introduit à 50°C sous azote et sous agitation de 150 t/mn. : 125 ml d'hexane sec, 4 mM de THA sous forme de complexe THA-PTES dans un rapport molaire de 30, 4,6 g. de composante catalytique sur support d'oxyde métallique poreux de l'exemple 1. On introduit en 30 minutes 0,25 ml d'héxène-1 dissous dans 20 ml d'hexane. Puis en ajoute 4,5 Nl/h d'éthylène pendant 1 heure puis 9,5 Nl/h d'éthylène pendant 5 heures.

L'introduction d'éthylène terminée on élimine le solvant sous azote à 60°C et 32,2 g. de composante catalytique sur support d'oxyde métallique poreux sous forme de prépolymère sec sont récupérés et conservés sous azote. Le degré d'avancement est égal à 7,0 g. de prépolymère par gramme de composante catalytique.

## EXEMPLE 3

On reprend les conditions de l'exemple 2 avec 4,6 g. de composante catalytique et à la place de l'héxène-1, 0,25 ml de 4-méthylpentène-1 dissous dans 20 ml d'hexane.

27,1 g. de composante catalytique sous forme de prépolymère sont récupérés et conservés sous azote. Le degré d'avancement est égal à 5,9 g. de prépolymère par gramme de composante catalytique.

## EXEMPLE 4

On reprend les conditions de l'exemple 2 avec 4,6 g. de composante catalytique sur support d'oxyde métallique poreux et à la place de l'héxène-1, 0,25 ml d'octène-1 dissous dans 20 cc. d'hexane.

39,5 g. de composante catalytique sous forme de prépolymère sont récupérés et conservés sous azote. Le degré d'avancement est égal à 8,6 g. de prépolymère par gramme de composante catalytique.

## EXEMPLE 5

Dans les conditions de l'exemple 1 a) on prépare une composante catalytique sur support de silice microsphéroidale (type 955 W Grace).

Dans un réacteur de 8,2 l. préalablement séché, purgé à l'azote et maintenu à 40°C on introduit successivement sous agitation de 300 t/min. : 3 litres d'hexane, 26 mM de THA sous forme du complexe THA-PTES dans un rapport molaire de 25, 20 g. de composante catalytique ci-dessus, 3 bars d'azote, 0,5 bar d'hydrogène. Puis sous débit contrôlé on intorduit de l'éthylène dans les conditions suivantes :

5 Nl/h pendant 1 heure

10 Nl/h pendant 30 minutes

20 Nl/h pendant 30 minutes

40 Nl/h pendant 30 minutes

80 Nl/h pendant 30 minutes

165 Nl/h pendant 1 heure 30 minutes

L'introduction de monomère terminée, on élimine le solvant à 60°C par entrainement à l'azote. On recueille 340 g. de prépolymère. Le degré d'avancement est de 17 g. de prépolymère par gramme de composante catalytique sur support de silice microsphéroïdale.

EXEMPLE 6

On reprend l'exemple 5 introduisant en 30 minutes, préalablement à l'introduction d'hydrogène, 5 g. de 4-méthylpentène-1 en solution dans 50 ml d'hexane.

On recueille 378 g. de prépolymère. Le degré d'avancement est de 18,9 g. de prépolymère par gramme de composante catalytique sur support de silice microsphéroïdale.

EXEMPLE 7

a) Dans un réacteur avec évent de deux litres muni d'une agitation, d'une double enveloppe et purgé à l'azote, on introduit : 167 mM de n-butyl(1-methylpropyl)magnésium (DBM) en solution dans l'hexane à une concentration de 0,76 M/l, 2 mM de tetraisobutylaluminoxane (TIBAO) en solution dans l'hexane à une concentration de 0,45 M/l.

Le mélange est agité durant une heure à 55°C.

Puis on refroidit le mélange à 25°C et on fait barboter 1,4 mole d'HCl additionné en 1 heure. On dégaze l'HCl de la suspension obtenue par barbotage d'azote. La suspension est ensuite portée à 55°C et on ajoute 104 mM de $TiCl_4$ sous agitation maintenue 1 heure.

On transfère la suspension par siphonage dans un réacteur à sole filtrante purgé à l'azote. Après filtration la composante catalytique est lavée deux fois avec 200 ml d'hexane, puis séchée par évaporation à l'azote à 55°C et l'on récupère 15,5 g. de composante catalytique.

b) Dans un réacteur de 8,2 litres préalablement séché, purgé à l'azote et maintenu à 40°C, on introduit successivement en agitant à 300 t/min. : 3 litres d'hexane, 13,6 mM de THA pur, 4 g. de la composante catalytique ci-dessus, 3 bars d'azote et 0,5 bar d'hydrogène. Puis sous débit contrôlé on introduit de l'éthylène dans les conditions suivantes :

5 Nl/h pendant 1 heure

10 Nl/h pendant 30 minutes

20 Nl/h pendant 30 minutes

40 Nl/h pendant 30 minutes

80 Nl/h pendant 30 minutes

165 Nl/h pendant 1 heure 40 minutes

L'introduction de monomère terminée, on élimine le solvant à 60°C par entrainement à l'azote. On recueille 423 g. de prépolymère. Le degré d'avancement est de 108 g. de prépolymère par gramme de composante catalytique.

EXEMPLE 8

A partir des prépolymères des exemples 1 à 6 on effectue une copolymérisation d'éthylène-butène en lit agité phase gazeuse.

On opère dans un réacteur de 8,2 litres préalablement séché en présence de 10 g. de poudre de polyéthylène comme charge dispersante. Dans ce réacteur maintenu pendant toute la polymérisation à 85°C on injecte sous agitation de 400 t/mn. sous vide de 1,33 Pa du butène-1 jusqu'à l'obtention d'une pression de 1 bar absolu. On complète l'injection de butène-1 jusqu'à une montée de la pression à 2 bars absolus. on injecte ensuite successivement dans le réacteur 1 bar d'hydrogène et 9 bars d'éthylène jusqu'à l'obtention des pressions partielles d'hydrogène et d'éthylène respectives de 1 et 9 bars. Après ces injections on introduit le prépolymère actif contenant la composante catalytique par poussée d'azote, l'injection d'azote étant poursuivie jusqu'à ce que la pression totale à l'intérieur du réacteur atteigne 21 bars. La pression est maintenue à cette valeur dans le réacteur par injection de mélange butène-1-éthylène dans un rapport molaire de 0,0466. Après 3 heures de réaction la polymérisation est arrêtée par décompression du réacteur. On purge à l'azote et on laisse refroidir.

A titre comparatif on effectue la même polymérisation à partir de la composante catalytique des exemples 1 et 5 n'ayant pas subi le traitement de prépolymérisation et de cette même composante prépolymérisée mais non supportée sur silice et décrite dans l'Exemple 7. Dans le cas où la composante catalytique n'a pas subi le traitement de prépolymérisation on ajoute 1,2 mM de THA comme cocatalyseur après la première injection de butène. S'agissant des prépolymères le cocatalyseur a déjà été introduit dans la composante et concentré sur le prépolymère lors de sa préparation.

Les quantités de réactifs et les résultats d'analyses sont donnés dans le tableau suivant.

EXEMPLE 9

Dans l'appareillage de l'Exemple 7 et dans les mêmes conditions de température et d'agitation on introduit sous vide de 1,33 Pa d'éthylène jusqu'à l'obtention de 9 bars, on ajoute 4 bars d'hydrogène puis 2 g. de prépolymère de l'Exemple 6 à l'aide de 8 bars d'azote. La pression est maintenue constante à 21 bars absolus par addition d'éthylène. La réaction est arrêtée après trois heures par refroidissement et décompression et on recueille le polymère.

Les caractéristiques du polymère sont les suivantes :

| | |
|---|---|
| Productivité : | 3440 g. de polyéthylène par gramme de composante catalytique sur support de silice |
| Diamètre moyen des particules : | 922 $\mu$m |
| Masse volumique apparente : | 0,399 cm$^3$/g |
| % de particules < 200 $\mu$m : | 1,8 |
| Morphologie : | sphéroïdale |
| Densité : | 0,958 |

POLYMERISATION DU MELANGE ETHYLENE-BUTENE 1

| Composante catalytique | quantité de prépo-lymère en g. | cocata-lyseur | Al/De** en moles | Produc-tivité *** | Dp 50 **** | % de par-ticules <200 $\mu m$ | Morpho-logie ***** | Densité g/cm$^3$ | C$_2$H$_5$ ****** | Coulabi-lité en secondes |
|---|---|---|---|---|---|---|---|---|---|---|
| Exemple 1 b | 1,0 | THA-PTES | 30 | 6 900 | 824 | 1,0 | G | 0,919 | 19,1 | 26 |
| Exemple 1 a comparatif (composante sur SiO$_2$ sans prépoly mérisation) | *0,15 | THA | – | 5 300 | 475 | 9,0 | G | 0,921 | 25,2 | 34 |
| Exemple 7 b comparatif (composante sans SiO$_2$ avec prépo-lymérisa-tion) | 3 | THA | – | 17 530 | 350 | 25 | G | 0,922 | 18,8 | pas de coulabi-lité |
| Exemple 2 | 1,0 | THA-PTES | 30 | 6 620 | 958 | 1,8 | G | 0,920 | 18,1 | 31 |
| Exemple 3 | 1,0 | THA-PTES | 30 | 7 000 | 820 | 3,0 | G | 0,918 | 17 | 26 |
| Exemple 4 | 1,0 | THA-PTES | 30 | 9 990 | 1 033 | 0,5 | G | 0,918 | 20 | 26 |

EP 0 296 021 B1

TABLEAU SUITE

| ! Composante catalytique | quantité de prépo-lymère en g. | cocata-lyseur | Al/De** en moles | Produc-tivité *** | Dp 50 **** | % de par-ticules <200 μm | Morpho-logie ***** | Densité g/cm³ | $C_2H_5$ ****** | Coulabi-lité en secondes |
|---|---|---|---|---|---|---|---|---|---|---|
| Exemple 5 | 2,0 | THA-PTES | 25 | 6 630 | 775 | 5,0 | S | 0,918 | 18,8 | 22 |
| Exemple 5 comparatif (composante sur $SiO_2$ sans prépo-lymérisa-tion) | *0,15 | THA | – | 5 300 | 533 | 20,0 | G | 0,925 | 17,6 | 51 |
| Exemple 5 comparatif (composante sur $SiO_2$ et prépolymé-risation) | 2,0 | THA | – | 7 018 | 730 | 9,0 | G | 0,924 | 19,7 | 33 |
| Exemple 6 | 2,0 | THA-PTES | 25 | 7 600 | 837 | 3,0 | S | 0,919 | 17,6 | 24 |

\*      Composante active supportée sur $SiO_2$

\*\*     DE = donneur d'électrons

\*\*\*    Productivité en grammes de polyéthylène par gramme de composante catalytique supportée sur silice ou sans silice pour l'Exemple 7

\*\*\*\*   Dp50 diamètre moyen des particules pris à 50 % de la courbe cumulative

\*\*\*\*\*  G = Morphologie granulaire anguleuse    S = Morphologie sphéroïdale

\*\*\*\*\*\* $C_2H_5$ = Nombre de branchement éthyl pour 1 000 carbones

EP 0 296 021 B1

**Revendications**

1. Procédé de traitement permettant de conserver la morphologie d'une composante catalytique de polymérisation ou de copolymérisation en phase gazeuse de l'éthylène ou de l'éthylène et d'au moins une alpha oléfine possédant de 3 à 12 carbones, ladite composante comprenant au moins du titane, du magnésium, du chlore et éventuellement un donneur d'électrons, le procédé consistant, après imprégnation d'un support d'oxyde métallique poreux par les composés du titane, du magnésium, du chlore et éventuellement le donneur d'électrons, à engager cette composante catalytique en présence d'un cocatalyseur à base d'alkylaluminium, dans une prépolymérisation, au moins partiellement en suspension, de l'éthylène ou de l'éthylène et d'une alpha oléfine caractérisé en ce que la prépolymérisation est menée, en présence d'un cocatalyseur constitué d'un alkylaluminium complexé par un donneur d'électrons, jusqu'à un degré de prépolymérisation supérieur à 1,1, le degré de prépolymérisation étant défini comme le poids de prépolymère, poids du catalyseur inclus, divisé par le poids de l'ensemble de la composante catalytique sur support d'oxyde métallique.

2. Procédé selon la revendication 1 caractérisé en ce que le degré de la prépolymérisation est compris entre 5 et 20 grammes de polyéthylène par gramme de composante supportée sur oxyde métallique poreux.

3. Procédé selon l'une des revendications 1 ou 2, caractérisé en ce que le degré de prépolymérisation est tel que le prépolymère formé représente au plus 1 % en poids du polymère final.

4. Procédé selon l'une des revendications 1 à 3 caractérisé en ce que pendant la première heure de la prépolymérisation le monomère est introduit dans le réacteur à un débit moyen égal ou inférieur à 10 Nl. x h-1 x g-1 de composante catalytique sur le support d'oxyde métallique poreux.

5. Procédé selon l'une des revendications 1 à 4 caractérisé en ce que dans le cas de la prépolymérisation en présence d'éthylène et d'alpha oléfine, on commence la prépolymérisation en présence d'alpha oléfine seule puis on la poursuit avec l'éthylène seul ou en mélange avec une alpha oléfine.

6. Procédé selon l'une des revendications 1 à 5 caractérisé en ce que préalablement à la prépolymérisation on imprègne le support d'oxyde métallique poreux d'un alkylmagnésien seul ou mélangé à un alkylaluminium, puis après traitement par un agent chlorant on imprègne le support du composé de titane.

7. Procédé de fabrication en lit fluidisé phase gazeuse d'homopolymère de l'éthylène ou de copolymère d'éthylène et d'une alpha oléfine possédant de 3 à 12 carbones caractérisé en ce qu'on utilise un catalyseur préparé selon l'une des revendications 1 à 6.

**Patentansprüche**

1. Verfahren zum Erhalt der Morphologie eines katalytischen Polymerisations- oder Copolymerisationsbestandteils in der Gasphase von Ethylen oder von Ethylen und wenigstens einem alpha Olefin mit 3 bis 12 Kohlenstoffatomen, wobei der Bestandteil wenigstens Titan, Magnesium, Chlor und gegebenenfalls einen Elektronendonator umfaßt, und wobei das Verfahren darin besteht, daß nach dem Tränken eines porösen Metalloxidträgers mit Titan-, Magnesium-, Chlor- und gegebenenfalls Elektronendonatorverbindungen diesen katalytischen Bestandteil in Gegenwart eines Cokatalysators auf der Basis von Alkylaluminium in einer Vorpolymerisation, wenigstens teilweise in Suspension, von Ethylen oder Ethylen und einem alpha Olefin einzusetzen, dadurch gekennzeichnet, daß die Vorpolymerisation in Gegenwart eines Cokatalysators, der aus mit einem Elektronendonator komplexierten Alkylaluminium besteht, bis zu einem Vorpolymerisationsgrad über 1,1 durchgeführt wird, wobei der Vorpolymerisationsgrad als das Gewicht des Vorpolymeren, inklusive Katalysatorgewicht, geteilt durch das Gewicht des gesamten katalytischen Bestandteils auf dem Metalloxidträger definiert ist.

2. Verfahren nach Anspruch 1, dadurch gekennzeichnet, daß der Vorpolymerisationsgrad zwischen 5 und 20 Gramm Polyethylen pro Gramm des von dem porösen Metalloxid getragenen Bestandteils liegt.

3. Verfahren nach einem der Ansprüche 1 oder 2, dadurch gekennzeichnet, daß der Vorpolymerisationsgrad so ist, daß das gebildete Vorpolymere höchstens 1 Gew.% des fertigen Polymeren beträgt.

4. Verfahren nach einem der Ansprüche 1 bis 3, dadurch gekennzeichnet, daß während der ersten Stunde der Vorpolymerisation das Monomere im Reaktor mit einem mittleren Durchsatz gleich oder kleiner als 10 Nl. x h−1 x g−1 des katalytischen Bestandteils auf dem porösen Metalloxidträger eingesetzt wird.

5. Verfahren nach einem der Ansprüche 1 bis 4, dadurch gekennzeichnet, daß man im Falle der Vorpolymerisation in Gegenwart von Ethylen und alpha Olefin die Vorpolymerisation in Gegenwart von alpha Olefin allein beginnt und dann mit Ethylen allein oder im Gemisch mit alpha Olefin fortsetzt.

6. Verfahren nach einem der Ansprüche 1 bis 5, dadurch gekennzeichnet, daß man vor der Vorpolymerisation den porösen Metalloxidträger mit Alkylmagnesium allein oder gemischt mit einem Alkylaluminium tränkt, und dann nach der Behandlung mit einem Chlorierungsmittel den Träger mit der Titanverbindung tränkt.

7. Verfahren zur Herstellung von Homopolymeren aus Ethylen oder von Copolymeren aus Ethylen und einem alpha Olefin mit 3 bis 12 Kohlenstoffatomen in der Gasphase eines Fließbetts, dadurch gekennzeichnet, daß man einen Katalysator verwendet, der nach einem der Ansprüche 1 bis 6 hergestellt ist.


**Claims**

1. A treatment process allowing the preservation of the morphology of a catalytic component for the polymerization or copolymerization in the gaseous phase of ethylene or of ethylene and at least one alpha olefin having 3 to 12 carbon atoms, said component comprising at least titanium, magnesium, chlorine and possibly an electron donor, the process comprising, after the impregnation of a support of porous metal oxide with the compounds of titanium, magnesium, chlorine and possibly the electron donor, the use of said catalytic component in the presence of an alkyl aluminium based cocatalyst in a prepolymerization, at least partially in suspension, of ethylene or ethylene and an alpha olefin, characterized in that the prepolymerization is performed in the presence of a cocatalyst formed by an alkyl aluminium complexed with an electron donor up to a degree of prepolymerization higher than 1.1, the degree of prepolymerization being defined as the weight of prepolymer, including the weight of the catalyst, divided by the weight of the whole of the catalytic component on the metal oxide support.

2. A process according to claim 1, characterized in that the degree of prepolymerization is between 5 and 20 grams of polyethylene per gram of component supported on porous metal oxide.

3. A process according to one of claims 1 or 2, characterized in that the degree of prepolymerization is such that the prepolymer formed represents at most 1% by weight of the final polymer.

4. A process according to one of claims 1 to 3, characterized in that during the first hour of prepolymerization the monomer is introduced into the reactor at a mean rate equal to or lower than 10 Nl. x. $h^{-1}$ x $g^{-1}$ of catalytic component on the support of porous metal oxide.

5. A process according to one of claims 1 to 4, characterized in that in the case of prepolymerization in the presence of ethylene and alpha olefin, the prepolymerization is started in the presence of alpha olefin alone, whereafter it is continued with ethylene alone or in mixture with an alpha olefin.

6. A process according to one of claims 1 to 5, characterized in that prior to prepolymerization the porous metal oxide support is impregnated with an alkyl magnesium alone or mixed with an alkyl aluminium, then after treatment with a chlorinating agent the support is impregnated with the titanium compound.

7. A process for the production in a fluidized bed gaseous phase of ethylene homopolymer or ethylene/alpha olefin copolymer having 3 to 12 carbon atoms, characterized in that use is made of a catalyst prepared according to one of claims 1 to 6.